# EUROPEAN PATENT APPLICATION

(11) **EP 0 874 508 A1**
(43) Date of publication of application: **28.10.1998**
(21) Application number: 97302714.7
(22) Date of filing: 21.04.1997
(51) Int. Cl.: H04M 3/46, H04M 1/274, H04M 1/27, H04Q 3/42

(54) **Communication system to provide called party location and pre-call warning**

(71) Applicant: HARRIS CORPORATION, Melbourne, Florida 32919 (US)
(72) Inventor: Bailis, Jason Mansfield, Novato, California 94945 (US); Warren, Dennis, Keen, Petaluma, California 95954 (US)
(74) Representative: van Berlyn, Ronald Gilbert

(57) **Abstract**

A telecommunication system for connecting a first device to a second device (e.g., making a telephone call from a computer to a called party) in which, before the connection is made, the first device provides second device locator information and/or a pre-connection warning. A data base at the first device stores the identities of devices, their access numbers, and a history of connection completions by time and day and access number to select automatically and automatically update after each connection attempt.

## Description

The present invention relates to communication systems to establish communication between at least two parties, and communication to a system for calling from a computer that provides a telephone number at which a called party is most likely to be reached.

Various systems exist to communicate connection between a first device and a second device using an access number. For example, a computer may be used to initiate a telephone call to a called party using a telephone number, with a visual display for information and an entry device for providing commands and information to the computer. A telephone call may be initiated at the computer by selecting an appropriate program stored in the computer and to provide a telephone number using the entry means, may be stored in a data base of called party names and telephone numbers and retrieved conventionally. The computer may cause the telephone number to be dialed and indicate whether the call has been completed.

Such computer calling systems provide little more than to promote sale. Known systems do not improve the percentage of completed calls, and do not provide advance warning that a call is being made at an inappropriate time. It would be necessary to indicate to a caller which telephone number should be used to provide the best assurance that the party will be reached, and to indicate when calls should not be placed to avoid potentially costly calls that may be answered by an answering machine or voice mail. A party may be reached most often on his mobile telephone at a particular time (e.g., rush hour), it would be desirable to have the computer first call the mobile telephone rather than an office telephone number that is likely to be unanswered or answered by a machine.

An object of the present invention is to provide a system for establishing a connection between two devices and to establish a connection between two devices that improves the rate at which connections are completed.

Another object is to provide a system for making a telephone call that provides a called party locator that has a history of completed calls by time of day and telephone number so that the call completion rate may be improved.

A further object is to provide a system for a making a telephone call from a computer in which a computer data base of parties to be called, their telephone numbers, and a call completion rate for each telephone number by time and day is accessed with the called party name and the calling time and day to provide a visual history of call completion rates.

The present invention includes a telecommunication system adapted to connect a first device to a second device to establish communications therebetween including a computer data base in a first device, said data base identifying second devices that can be selectively connected to the first device and their access numbers by time a connection completion history for the access numbers, identifying means of a first device to one of a second devices to be connected, means for predetermining a time when a connection to the identified second device is to be made, means for accessing the data base with the identified second device and the predetermined time to the access number at which the identified second device is most likely to be connected, means for attempting to connect the first device with the identified second device using the access number having time periods for defined connections with means for the second devices, with indicating means at the first device when the predetermined time is within one of the time periods for definite connections, with means for updating said data base based on a result of attempting to connect the first device to the identified second device using the predetermined access number.

The invention also includes a telecommunication system including a method to connect a first device to a second device to establishing communication therebetween comprising the steps of, providing in the first device a data base of plural second devices and their access numbers for establishing communication therebetween, each of the second devices having one or more access numbers at which it can be reached, the data base including a connection completion history for each of the access numbers indicating which of the access numbers is most likely to be reached at a predetermined time, identifying to the first device a one of the second devices with whom communication is to be established, predetermining a time when a connection to the identified second device is to be mad, accessing the data base with the identified second device and the determined time to determine the access number at which the identified second device is most likely to be reached, attempting to connect the first device to the identified second device using the determined access number ,in which the data base includes time periods for suitable connections for the second devices the step of providing an indication at the first device when the determined time is within one of the time periods for suitable connections.

The invention will now be described, by way of example, with reference to the accompanying drawings in which...
Figure 1 is an example of a visual display provided to a caller in which call completion histories are indicated.
Figure 2 is an example of a visual warning provided to a caller when a call is to be placed at a time when it is inappropriate for the called party to receive a call.
Figure 3 is a block diagram of an embodiment of the present invention.
Figure 4 is a block diagram of a further embodiment of the present invention with both the called party locator and the pre-call warning.

A computer data base provides called party locator information for determining the telephone number at which a party to be called is most likely to be reached. The data base may store the names (or other identification) of parties to be called, their telephone numbers (e.g., office, facsimile, e-mail, home, cellular, pager, job site, internet address, etc.), and a call completion history for each of the telephone numbers by time of day. The computer has a time function that provides time and date. Time may be recorded and may be kept in caller local time, with provisions for conversion to called party local time (e.g., determined by reference to country and/or area code of the called party).

The called party locator system may be operated by accessing the data base and its operating program, and entering the identity of the called party. The time of day (and optionally the date and/or day of the week) may be provided automatically by the computer or entered manually. The call completion history may be presented to the caller so that the caller can decide which number to call, or the computer may make the selection automatically by determining the telephone number with the highest completion rate for the time of call.

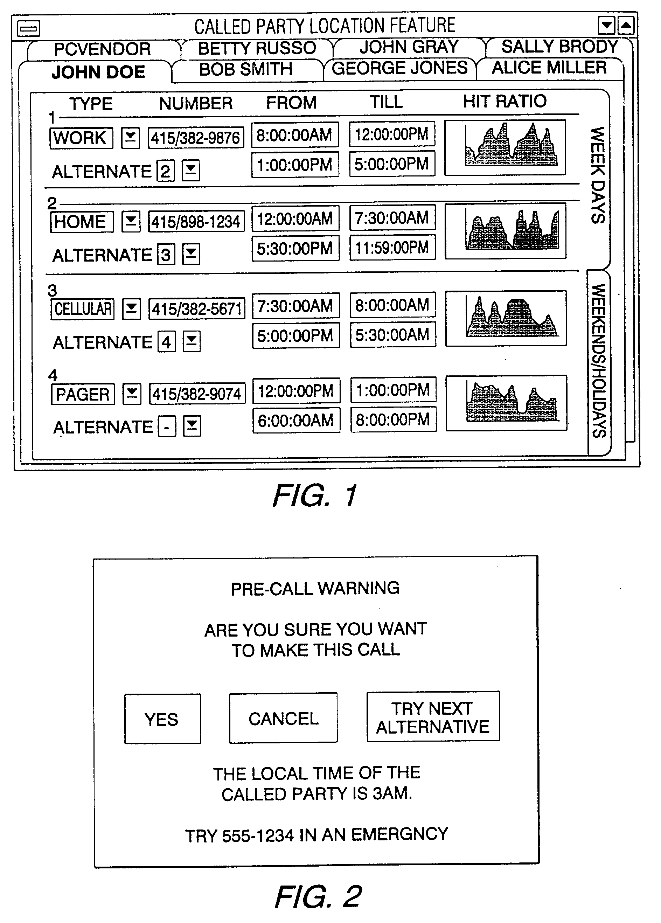

The data base may indicate that for calls between 8AM and noon, the called party has been reached at an office number 85% of the time and by pager 15% of the time, and that for calls between noon and 2PM the called party has been reached by pager 60% of the time, at a job site number 20% of the time, and at an office number 20% of the time. This information may be presented to the caller conventionally, such as on a visual display or with a voice synthesizer. The visual display may provide statistics such as in this example, and/or may provide histograms showing the number of calls completed by time period. The histograms may provide a finer breakdown of time periods to further enhance the call completion rate (e.g., 15 minute periods), and may be preferred if computer and display space are available. Figure 1 illustrate a visual display. In a preferred embodiment, the caller selects the telephone number from the displayed information by touching the display or by making an entry with a keyboard or mouse, and the computer initiates the call responsive to the selection, although this is not required for the present invention. The data base may updated after each call, when the time, telephone number and whether the party was successfully reached are known. Preferably, the data base is updated with entries that indicate whether the called party was actually available at the called number, not just whether the called number was answered.

In a further embodiment of the present invention that provides pre-call warnings, the data base may store periods when calls to parties are unsuitable. Time periods when calls to parties may be inappropriate may include weekends, holidays, after close of business, business trips, vacations, periods when telephone charges are particularly high, etc. and the data base may store these periods by day and time. The data base may also store other information such as a further caution not to call a party at home unless it is an emergency, or a forwarding or emergency number, and may include provisions for universal entries that may be provided to every party in the data base, such as major holidays. When a warning is provided because the telephone rates are high, an alternative time when rates are more economical may be recommended.

When a call is initiated to a party, the data base may be checked to determine whether the time of the call is within one of the periods when calls are inappropriate. If the call is within one of the periods, a warning may be provided to the caller, such as by visual or aural means. In a preferred embodiment the time is displayed in the called party's local time (e.g., "WARNING: the local time of the party you are calling is 3AM.") Upon receipt of the warning the caller may be provided the opportunity to complete or cancel the call. An exemplary visual warning is illustrated in Figure 2. If there is further caution associated with the time period, it may also be displayed.

The warning system may also be used to screen outgoing calls by providing a warning that the caller is not authorized to make the call unless the caller provides a charge code recognized by the system. For example, the system may limit a particular phone to local calls only, and callers may override the limitation by entering an identification number to which a long distance call will be charged.

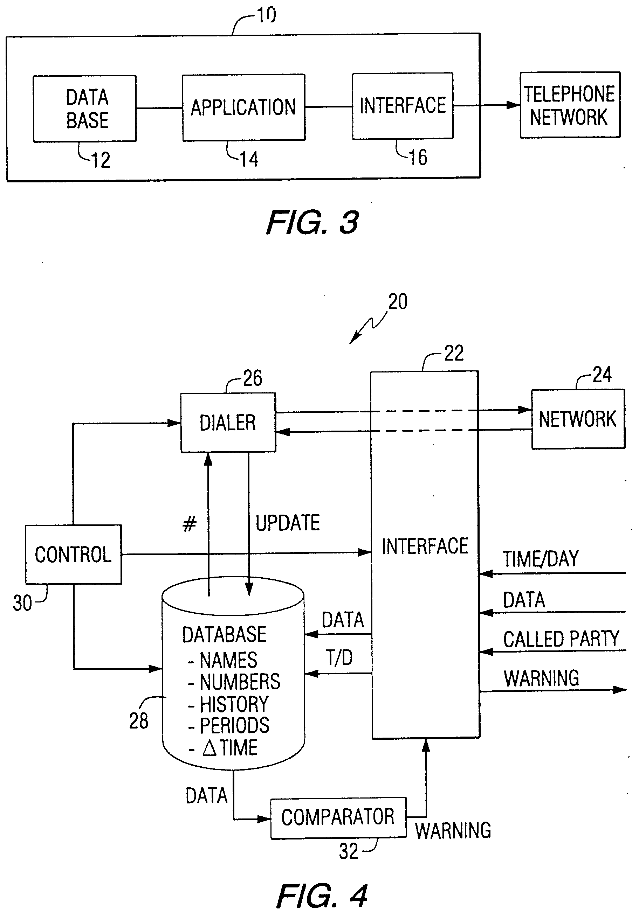

Figure 3 illustrates an embodiment that include a computer 10 with a data base 12 for storing one or both of the called party locator information and pre-call warning information discussed above. The data base 12 may be accessed with a computer add-on application 14 that may be provided routinely by those of skill in the art. The application 14 may interface with a conventional computer telephone system, such as that known by the registered trademark, HARRIS® PC PHONE, that connects the computer 10 to a public or private telephone network. The application 14 may operate with one or both of the called party locator and the pre-call warning.

In an embodiment with both the called party locator and the pre-call warning illustrated in Figure 4, a computer 20 may include an interface 22 with a public or private telephone network 24 and a dialer 26 for initiating a call to the called party. A data base 28 may store called party names, numbers, call completion histories, and periods when calls to parties are inappropriate. A time conversion provision may be added for out-of-area calls. A control 30 may retrieve and direct the information, and a comparator 32 may determine whether a pre-call warning is needed.

A telecommunication system for connecting a first device to a second device (e.g., making a telephone call from a computer to a called party) in which, before the connection is made, the first device provides second device locator information and/or a pre-connection warning. A data base at the first device stores the identities of devices, their access numbers, and a history of connection completions by time and day and access number to select automatically and automatically update after each connection attempt.

## Claims

1. A telecommunication system adapted to connect a first device to a second device to establish communications therebetween including a computer data base in a first device, said data base identifying second devices that can be selectively connected to the first device and their access numbers by time a connection completion history for the access numbers, identifying means of a first device to one of a second devices to be connected, means for pre-determining a time when a connection to the identified second device is to be made, means for accessing the data base with the identified second device and the predetermined time to the access number at which the identified second device is most likely to be connected, means for attempting to connect the first device with the identified second device using the access number having time periods for defined connections with means for the second devices, with indicating means at the first device when the pre-determined time is within one of the time periods for definite connections, with means for updating said data base based on a result of attempting to connect the first device to the identified second device using the predetermined access number.

2. A system as claimed in claim 1 wherein the first device comprises the computer, the second devices comprise telephones of different parties to be called by the said computer, and the access numbers are telephone numbers, in which the computer determines to automatically call the telephone number at which the called party is most likely to be reached based on the connection completion history, including a visual display at said computer, said visual display comprising the telephone numbers for the called party and the frequency of completed telephone calls to each of the visually indicated telephone numbers by time, and means for manually selecting the telephone number at which the called party is most likely to be reached based on the visually displayed connection completion history.

3. A telecommunication system for telephone call completion rate comprising a computer with a data base with telephone numbers of parties to be called and a call completion history for each of the telephone numbers means for accessing said data base with an identity of a party to be called and a day and time to identify the telephone number with the best call completion history for the day and time, means for dialing the identified telephone number, including monitoring means for completion of a telephone call, and means for updating the call completion history in said data base based on whether the called party has been reached.

4. A system as claimed in claim 3 wherein said data base further includes local time periods at the location of the parties to be called during which telephone calls are suitable, and means for indicating when a telephone call is to be made during one of said periods, with the data base in a first device, said data base identifying second devices that can be selectively connected to the first device and their access numbers for making the connection, and including time periods for suitalbe connections for the second devices, means for identifying to the first device a one of the second devices to be connected, means for pre-determining a time when a connection to the identified second device is to be made, means for indicating at the first device when the pre-determined time is within one of the time periods for suitable connections.

5. A telecommunication system including a method to connect a first device to a second device to establishing communication therebetween comprising the steps of, providing in the first device a data base of plural second devices and their access numbers for establishing communication therebetween, each of the second devices having one or more access numbers at which it can be reached, the data base including a connection completion history for each of the access numbers indicating which of the access numbers is most likely to be reached at a predetermined time, identifying to the first device a one of the second devices with whom communication is to be established, predetermining a time when a connection to the identified second device is to be mad, accessing the data base with the identified second device and the predetermined time to the access number at which the identified second device is most likely to be reached, attempting to connect the first device to the identified second device using the pre- determined access number , in which the data base includes time periods for suitable connections for the second devices the step of providing an indication at the first device when the determined time is within one of the time periods for suitable connections.

6. A method claimed in the system of claim 5 wherein the time in the data base and the predetermined time includes a day of the week and time of day, the time in the data base includes holidays, and has the step of updating the data base based on a result of attempting to connect the first device to the identified second device using the determined access number, by providing at the first device a visual indication of the access numbers for the identified second device and the frequency of completed connections to each of the visually indicated access numbers by time, in which the data base includes time periods for suitable connections for each of the second devices, and further comprising the step of providing an indication at the first device when the determined time is within one of the time periods for suitagle connections, the first device being a computer and the second device being a party called by the computer, and wherein the access number is a telephone number.

7. A method as claimed in claim 6 wherein the computer automaticaly determines the telephone number at which the called party is most likely to be reached based on the connection completion history, with the steps of providing from the computer the visual display of the telephone numbers for the called party and the frequency of completed telephone calls to each of the visually indicated telephone numbers by time, and manually selecting the telephone number at which the called party is most likely to be reached based on the visually displayed connection completion history.

8. A telecommunication system including steps to connect a first device to a second device to establish communication therebetween comprising the steps of providing in the first device a data base of plural second devices and their access numbers, each of the second devices called having one or more access numbers, the data base including time periods for suitable connections for each of the second devices, identifying to the first device a one of the second devices to be connected, pre-determining a time when a connection to the identified second device is to be made, accessing the data base with the identified second device and the pre-determined time as to whether the pre-determined time is within one of the time periods for suitable connections, and providing an indication at the first device when the determined time is within one of the time periods for suitable connections, with the indication at the first device by a visual indication, and the data base includes by time a connection completion history for the access numbers at which each of the second devices can be connected.
